# EUROPEAN PATENT SPECIFICATION

(11) **EP 2 702 756 B1**
(45) Date of publication and mention of the grant of the patent: **08.06.2022**
(21) Application number: 12724745.0
(22) Date of filing: 27.04.2012
(51) Int. Cl.: H04N 1/195

(54) **PORTABLE CAMERA**
TRAGBARE KAMERA
CAMÉRA PORTABLE

(30) Priority: 29.04.2011 NL 2006698
(43) Date of publication of application: 05.03.2014
(73) Proprietor: Optelec Holding B.V., 2991 XT Barendrecht (NL)
(72) Inventor: VAN DER SNOEK, Ronald Patrick Jacob Qurinus, NL-3247 ED Dirksland (NL)
(74) Representative: V.O.
(86) International application number: PCT/NL2012/050296
(87) International publication number: WO 2012/148281

(56) References cited:
- EP-A2- 1 233 606
- GB-A- 2 403 370
- US-A1- 2002 145 813
- US-A1- 2003 095 200
- US-A1- 2004 246 340
- US-A1- 2009 059 316
- US-A1- 2010 026 854
- US-A1- 2010 073 545

## Description

The disclosure relates to a portable magnifying camera for the visual disabled person. More particularly, the disclosure relates to a portable camera for recording and displaying an image of an object such as printed paper, wherein the camera is arranged to be positioned on an object to be recorded wherein the cameras is provided with an outer lower surface which is arranged and intended to be in contact with the object if the camera is positioned on the object, a light sensitive sensor for obtaining an image of at least a portion of the object, a display and processing means for processing the image obtained by means of the sensor and for displaying at least a portion of the recorded image on the display, in possible a magnified form, wherein the camera is provided with at least one lighting unit for lighting the object to be recorded when the camera is positioned on the object.

Such a camera is generally known. The object to be recorded is for example a newspaper which lies on the table. In such a camera, lighting is very important. Important parameters are glare, shadow and gradient on a surface of the object to be recorded. For bigger machines it is possible to place and design the lighting unit in such a way that the intensity of the light is spread evenly over a surface to be recorded. When designing compact magnifiers, the lighting is always a problem because the proximity of the lighting unit causes light spots on the object to be recorded as well as glare.Thus a problem is that light which is emitted by the lighting unit is reflected by a glossy surface to be recorded by the camera towards the sensor so that the sensor can "see" the lighting unit as an image. In the past this has been solved by using indirect or concealed lighting causing a more uniform incidence. In practice this means diffuse reflection: the lighting unit shines on a frosted white surface and then reflects on the object to be recorded. Another well-known solution is adding a diffuser in between the object to be recorded and the lighting unit. This will result in a diffuse light source which will minimize shadow and light spots, thus resulting in an evenly illuminated object to be recorded. A draw-back in this design is however a lot of loss of efficiency. This is caused by the fact that the light is partly blocked by the diffuser. Another draw-back is that the light diffuse surface (reflector or translucent) will act as a new light source although bigger and spreading "softer" light. The proximity problem (glare) in compact design however remains, now with a bigger surface of light. Therefore, on reflective objects to be recorded, like glossy paper, the diffuser will still be reflected as an outline of surface that is overexposed on the object area. This will have an impact on black and white tones on the object. This again will result in problems when enhancing the image in high contrast pictures, for example, when the image is translated in black and white only. The overexposed area will be translated in white, masking the more subtle grey tones "underneath". A bigger diffusion (for example twice as big as the object area) to prevent this phenomenon is not a solution, because such a diffuser would be too big for a portable camera.

US 2010/026854 discloses a portable magnifier camera that can be selectively positioned into a variety of configurations. At least four distinct viewing configurations are provided: a reading mode wherein the camera rests flatly upon the viewed object; a writing mode wherein the camera rests at an angle upon the viewed object; a hand-held mode wherein the user holds the camera relative to a distant object; and an inspection mode wherein the user holds the viewed object relative to the camera. These configurations enable a user to effectively view objects of differing size and at varying distances.

US 2010/073545 A1 discloses is a magnifier for use by blind or low vision users. The magnifier includes a camera, such as a CMOS image sensor, that displays enlarged images upon a screen for easy viewing. The magnifier further includes a handle that is pivotally interconnected to a housing to allow for hand-held use in a variety of different configurations.

US 2003/095200 A1 discloses an image inputting device that comprises a base having an object resting surface on which an object rests, an image pickup unit, a reflecting unit having a reflecting surface for reflecting a light from the object and introducing the light to the image pickup unit, and a holding unit disposed on the base to be rotatable about a first axis parallel to the object resting surface. The image pickup unit is rotatable about a second axis disposed on the holding unit, and the reflecting unit is rotatable about a third axis disposed on the holding unit.

EP 1 233 606 A2 discloses a digital image capture apparatus which is arranged to capture at least two images of a document and combine the images to produce a final image in which the effects of specular reflection and/or ambient light are removed. The apparatus includes a light source and a first image is captured with the source illuminating the document. A second ambient image is captured with the light source switched off, and the images are combined either by subtracting the ambient image from the first image or by replacing areas of the first image by corresponding areas of the ambient image.

US 2009/059316 A1 discloses scanner designs to improve imaging and reduce errors during the scanning process. Embodiments disclosed include, for example, the use of dual cameras to improve imagery and reduce the scanner enclosure size, synchronized lighting techniques during the scanning sequence, shielded lens for the camera scanner, a scanner enclosed on at least three sides, adjustments to scanner lighting based on the levels of ambient lighting, a combined branding and scanner apparatus, a gimbaled scanner mount, and a tilted platen with stop for document alignment.

It is an object of the invention to provide a solution to at least one of the above referred to draw-backs.

According to the invention, there is provided a portable camera as set out in appended claim 1.

According to the invention, the camera is arranged such that light rays of the at least one lighting unit which are, in use, submitted to the object via a mirror and/or a lens, wherein the lighting unit is arranged within the camera on a position relative to the sensor such that if the object which is recorded would be a flat mirror whereon the camera is positioned for recording the reflective surface of the flat mirror (so that the reflective surface of the flat mirror faces the sensor), the lighting unit is placed in an area where the sensor cannot see the at least one lighting unit and the lighting unit is located outside a viewing field of the sensor which viewing field is formed in combination with the flat mirror, characterised in that the camera is arranged such that light rays of the at least one lighting unit which are, in use, submitted to the object are not diffused, and are submitted to the object via at least one light mirror of the camera by means of specular reflection only and/or via at least one lens by means of specular transmission. It further holds that the flat mirror is sufficiently large so that it extends through the full viewing field of the sensor. This means that the full viewing field is mirrored by the flat mirror for defining the position of the lighting unit relative to the sensor. Because the light source is placed in an area where the sensor cannot see it, the problem of glare cannot occur. Also a more even distribution of light on the object can be realized. Of course the mirror itself does not belong to the camera. The mirror is merely used for defining the position of the lighting unit relative to the sensor wherein this position is independent from the presence or absence of the mirror. In other words, because the light source is placed in an area where the sensor cannot see it if the mirror would be present, the problem of glare cannot occur if other objects having a (somewhat) reflective surface are recorded. Alternatively, the camera is arranged such that light rays of the at least one lighting unit which are, in use, submitted to the object are directly submitted to the object, wherein the lighting unit is arranged within the camera on a position relative to the sensor such that the lighting unit is located outside a viewing field of the sensor which viewing field would be formed in combination with a virtual flat mirror extending in a virtual flat plane extending through the lower outer surface wherein a reflective surface of the mirror faces the sensor. Again it further holds that the virtual flat mirror is sufficiently large so that it extends through the full viewing field of the sensor. This means that the full viewing field is mirrored by the flat mirror for defining the position of the lighting unit relative to the sensor. Because the light source is placed in an area where the sensor cannot see it, the problem of glare cannot occur. Also a more even distribution of light on the object can be realized.

Preferably, the camera is provided with the at least one light mirror for folding up the light path which extends from the at least one lighting unit to the flat mirror. Because the light path may be folded up, the optical distance between the lighting unit and the object to be recorded can be made bigger without having a negative impact on the size of the portable magnifying camera as such. Such a relatively bigger optical distance between the light and the object, will result in the black and white tones to be eliminated more evenly relative to the situation when there is a relative small optical distance between the lighting unit and the object.

Preferably, it holds that the sensor is provided with an optical axis wherein, in use, the at least one lighting unit is positioned within a lighting unit plane which is perpendicular to the optical axes wherein the lighting unit plane lies between the sensor and a virtual flat plane through which the lower outer surface extends. In this way the portable magnifying camera can be made of a compact design.

According to a preferred embodiment it holds that the camera is provided with a first body portion, a second body portion and a hinge means for connecting the first body portion and the second body portion together wherein the first body portion can move relative to the second body between a folded condition and an unfolded working condition for use of the camera, wherein the second body portion is provided with the sensor and the first body portion is provided with the lighting unit and wherein in the working condition there is a distance between the first body portion and second body portion. In this way the camera can be positioned in a folded condition so that it becomes relatively compact and can be carried easily by the visually handicapped person. For example, the camera may have such a size that it can be positioned in a pocket of a jacket or trousers.

Preferably it holds that the first body portion is arranged to be positioned on the object to be recorded. In that case the first body portion may comprise the outer lower surface. The lighting unit may be arranged to submit light in a direction of the second body portion if the camera is in the folded condition. Preferably, it holds that if the camera is in the unfolded condition, in use, the second body portion extends above the first body portion. In that manner, the portable magnifying camera can be easily positioned on a flat surface which is, for example, provided with a paper to be recorded. Preferably it holds that the real mirror is formed by an outer surface of the second body portion wherein, if the camera is in the unfolded condition, in use, the mirror faces downwardly. Preferably it holds that the second body portion is provided with a display, wherein the display and the mirror lie on opposite sides of the second body part. Preferably it holds that if the camera is in the folded condition, the mirror lies against a surface of the first body part which surface lies opposite the surface of the first body part which forms said outer lower surface.

Light rays of the lighting unit are transmitted directly to the object via a mirror and/or a lens. Hence direct transmission of these light rays means that these light rays are not diffused by reflection on, for example, a frosted wall and/or are not diffused by transmission through, for example, a diffuser. Transmission of the light rays through a lens (which provides specular transmission, e.g. conversion and/or diversion of the light beams) or reflection of the light rays on a mirror (which provides specular reflection of the light beams) is however considered as direct transmission of the light rays. In other words: light rays of the lighting unit are transmitted directly to the object wherein the light rays are transmitted to the object via at least one mirror and/or via at least one lens.

In an embodiment, the portable camera may be used for different purposes. The portable camera according to this embodiment is provided with a first body portion, a second body portion and a means for connecting and disconnecting the first body portion and the second body portion, wherein the second body portion is provided with the lighting unit, the sensor and the display and wherein the first body portion is arranged to be positioned on the object to be recorded while the second body portion is connected with the first body portion such that, in use, the first body portion provides a fixed distance between the second body portion and the object to be recorded wherein the first body portion is provided with a side wall surrounding an inner space of the first body portion and a first and second opening lying opposite to each other and each providing visible access to the inner space (if the first body portion and the second body portion are disconnected from each other) wherein if the first body portion and the second body portion are connected together the second opening faces the second body portion and the first opening, in use, faces the object to be recorded such that the sensor can capture an image of the object to be recorded via the second opening, the space and the first opening. Because the first body portion can be disconnected from the second body portion the second body portion can also be used for recording and displaying, for example, an environment of the user or another object if the second body portion is separated from the first body portion. In that mode of use the second body portion need not to be positioned on the object but may simply be hand- held. Because the second body portion is provided with the lighting unit an object or environment to be recorded and displayed by means of the second body portion only, can also be enlightened.

According to a preferred embodiment the first body portion comprises the outer lower surface. In that case the outer lower surface may comprise the first opening. Preferably the display is inclined relative to the outer lower surface if the second body portion is connected with the first body portion. This provides an easy use if the outer lower portion is positioned on a horizontal surface of an object to be recorded and displayed. According to a special embodiment it holds that if the first body portion is connected to the second body portion a distance between the lighting unit and the outer lower surface is smaller than a distance between the sensor and the outer lower surface. The advantage of the relatively large distance between the sensor and the outer lower surface is that a relative large area of the object can be recorded. The advantage of the relatively small distance between the lighting unit and the outer lower surface is that the object can be lighted efficiently. Preferably the second body portion is provided with a first and second side extending substantially parallel to each other wherein the second side comprises the display and the first side faces the first body portion if the first body portion is connected to the second body portion and/or in that the second body portion has an overall shape of a flat rectangular plate. This enables an easy use of the second body portion if the second body portion is disconnected from the first body portion. Preferably it holds that, the first body portion is provided with a first and second side extending at an angle relative to each other wherein the first side comprises the first opening and the second side comprises the second opening wherein the first side of the second body portion faces the second side of the first body portion if the first body portion is connected to the second body portion. This particular shape of the first body portion provides several advantages: it enables an easy way for the display to be angled relative to the outer lower surface while at the same time the second body portion may have the preferred shape as discussed above. Also the preferred positions of the sensor and the lighting unit relative to the outer lower surface as discussed above can be realised in an easy manner.

According to a advantageous embodiment it further holds that a portion of an inner surface of the first body portion is curved such that, in use, it reflects some of the light emitted by the lighting unit towards the first opening if the first body portion is connected to the second body portion. In this way a more even light distribution over the first opening of the light emitted by the lighting unit can be obtained. This light distribution is at least substantially the sum of the light which is submitted directly from the lighting unit to the first opening and the portion of the light which is reflected by the portion of the curved inner surface towards the first opening. In this respect it preferably holds that the portion of the inner surface is arranged such that the portion of the light emitted by the lighting unit which is reflected by the portion of the inner surface is reflected towards an area of the first opening having a larger distance to the lighting unit than other areas of the first opening, more particularly in that the portion of the inner surface is arranged such that the portion of the light emitted by the lighting unit which is reflected by the portion of the inner surface is reflected towards an area of the first opening having a larger distance to the lighting unit than each other areas of the first opening wherein in particular the area of the first opening having a larger distance to the lighting unit than other areas forms a first halve of the first opening and the other areas form a second halve of the first opening wherein the first halve and the second halve in combination form the first opening. The mentioned areas of the first opening may lie in a virtual plane coinciding with the outer lower surface. Also it may hold that the light rays emitted by the lighting unit which directly illuminates a plane laying in the first opening provide a first distribution of light intensity (for example measured in Lux) in the plane which is not uniform spread over this plane wherein the portion of the inner surface is arranged such that the portion of the light emitted by the lighting unit which is reflected by the portion of the inner surface provides in combination with the light rays which are directly received in the plane a total distribution of light intensity (for example measured in Lux) in the plane which is more uniform spread over this plane than the first distribution. The plane may coincide with the outer lower surface.

Also it may hold that the first opening is provided with a first edge and a second edge laying opposite to each other wherein the lighting unit directly illuminates a plane through the first opening adjacent the first edge with an intensity (for example measured in Lux) which is higher than the intensity by which the plane adjacent the second edge is directly illuminated by the lighting unit and wherein the portion of the inner surface is arranged such that the portion of the light emitted by the lighting unit which is reflected by the portion of the inner surface illuminates the plane adjacent the first edge with an intensity which is lower (including zero intensity) than the intensity by which the plane is illuminated adjacent the second edge by the lighting unit via the portion of the inner surface. Again the plane mat coincide with the outer lower surface. It may also hold that the portion of the inner surface is arranged such that the portion of the light emitted by the lighting unit which is reflected by the portion of the inner surface has a larger intensity on a position laying in the first opening having a larger distance to the lighting unit than other positions laying in the first opening. This intensity may be defined as the intensity of the light at such a position laying in a plane which coincides with the outer lower surface. It may also hold that the portion of the inner surface is arranged such that the portion of the light emitted by the lighting unit which is reflected by the portion of the inner surface increases the intensity of the light more in a first area of the first opening than in a second area of the first opening wherein the intensity of the light in the first area as a result of the light which is directly received from the lighting unit in the first area is lower than the intensity of the light in the second area as a result of the light which is directly received from the lighting unit in the second area, wherein in particular the first area and the second are each form a halve of the first opening and wherein the first area and the second area in combination form the first opening. It may hold that the first area and the second area lay in a plane coinciding with the lower outer surface. The invention will now be clarified on the basis of the drawings wherein:
Figure 1 shows a schematic view of a possible embodiment of a portable magnifying camera according to the invention;
Figure 2 shows a practical embodiment of a portable magnifying camera according to the principle of figure 1;
Figure 3 shows the portable magnifying camera of figure 2 in the unfolded condition from a first point of view; and
Figure 4 shows the portable magnifying camera of figure 2 in the unfolded condition from a second point of view.
Figure 5 shows a first view of an alternative embodiment of a camera according to the invention;
Figure 6 shows a second view of the camera according to figure 5.
Figure 7 shows a view of the second body portion of the camera according to figure 5;
Figure 8 show a bottom view of the camera according to figure 5.
Figure 9A shows a cross section of the camera of figure 5;
Figure 9B shows a cross section of the camera of figure 5
Figure 10 shows a possible use of the camera according to figure 5; and
Figure 11 shows a possible use of the second body portion of the camera according to figure 5.

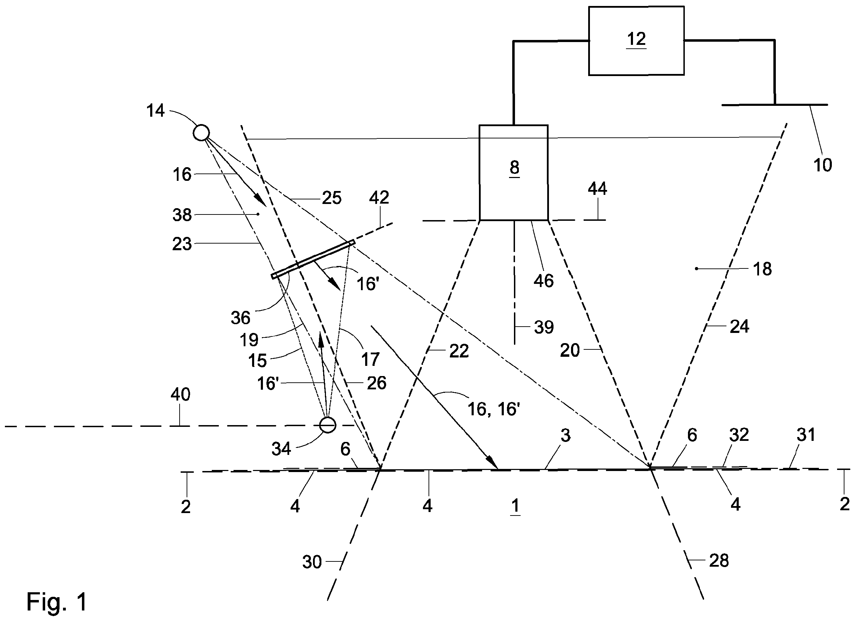

In figure 1 a portable magnifying camera is referred to by means of reference number 1. The camera is for recording and displaying an image of an object such as printed paper lying on a surface of a table. In figure 1 the surface of the table is referred to by reference number 2. On this table 2, an object to be recorded is provided with reference number 4. As is shown in figure 1 the camera is positioned on the object 4 to be recorded. The camera is provided with an outer surface 6 which is arranged to be in contact with the object 4 if the camera is positioned on the object 4. The camera is further provided with a light sensitive sensor 8 for obtaining an image of at least a portion of the object 4. The light sensitive sensor 8 is, for example, a CCD or CMOS. Other types of sensors are however also possible.

Furthermore, the camera is provided with a display 10 and processing means 12 for processing the image obtained by means of the sensor 8 and for displaying at least a portion of the recorded image on the display 10 in a possible magnified form. The camera is further provided with at least one lighting unit 14 for lighting the object 4 to be recorded when the camera is positioned on the object. The lighting unit 14 may for example be formed by well-known led's.

According to the invention the lighting unit is located on a special position. As can be seen in figure 1, the lighting unit is positioned such that light rays 16 of the lighting unit which are submitted to the object 4 are directly submitted to the object. Furthermore, the lighting unit is arranged within the camera such that if the object 4 which is recorded, would be a flat mirror 4 whereon the camera is positioned for recording the reflective surface 3 of the flat mirror 4, the lighting unit is located outside a viewing field 18 of the sensor which the viewing field is formed in combination with the flat mirror 4. This means that the reflective surface 3 of the flat mirror faces the sensor 8. It also means that the sensor can not 'see' the lighting unit via the flat mirror. The outer boundaries of the viewing field 18 are indicated by dotted lines 20, 22, 24, 26. The flat mirror is sufficiently large so that it extends through the full viewing field of the sensor. Indeed the flat mirror is sufficiently large so that it does not limit the size of the viewing field extending away from the reflective surface of the flat mirror (the portion of the viewing field which extends away from the reflective surface of the mirror extends between the dotted lines 24 and 26 and is not limited by a size of the flat mirror because the flat mirror extends through the full viewing field. This also means that the full viewing field is mirrored by the flat mirror for defining the position of the lighting unit relative to the sensor.). In fact the viewing field which extends between the dotted lines 20 and 22 is within the viewing field which extends between the lines 24 and 26. The viewing field which would extend in figure 1 below the flat mirror 4 if this mirror would be deleted, is indicated by dotted lines 28, 30, which dotted lines again show the outer boundaries of this portion of the viewing field. The resulting viewing field which boundaries are formed by the dotted lines 20, 22, 28, 30 has the form of a cone. These dotted lines 20, 22, 28, 30 form the outer boundaries of the viewing field without the object 4. However due to the object 4 in the form of the mirror 4 the portion of the viewing field which is bounded by the dotted lines 28, 20 is mirrored in a flat plane 31 which extends through the flat mirror 4. The actual viewing field which is reflected in the flat mirror 4 and which lies within the dotted lines 24, 26, forms a portion of the cone.

As becomes clear from figure 1, the lighting unit is arranged within the camera such that the lighting unit is located outside the viewing field of the sensor 8. The advantage is that if the object 4 would, for example, be printed paper which at least slightly reflects light by means of specular reflection, the image of such object will not be glared by the lighting unit 14. The sensor 8 can not 'see' the lighting unit 14 via a reflective surface of the object (independent from the size of the reflective surface) which reflective surface would face the sensor 8. This holds for each size of the reflective surface of the object because the above mentioned flat mirror which was used for defining the position of the lighting unit within the camera extends through the full viewing field of the sensor.

On the other hand the light emitted by the lighting unit will lighten directly the object.

As becomes clear from figure 1, the outer lower surface 6 extends in a virtual flat plane 32 wherein, in use, the lighting unit submits light to the virtual flat plane 32. Also it holds that the flat mirror 4 lies against the virtual flat plane 32. In fact for determining the viewing angle it is assumed that the flat plane 32 coincides with the flat plane 31 now these planes lie against each other (for clarity reasons in figure 1 there is shown a schematic small distance between plane 31 and plane 32). This means that it also holds that the lighting unit is located outside a viewing field of the sensor which viewing field is formed in combination with the virtual flat plane 32 if the virtual flat plane would be a flat mirror.

The camera is arranged such that the light rays of the lighting unit 14 are submitted directly to the object. If there would be any reflection of the light that reaches the object 4 it would be specular reflection only.

In accordance with a preferred embodiment the lighting unit 14 is replaced by a lighting unit 34. Furthermore, in that preferred embodiment the camera is provided with a light mirror 36 for folding up the possible light paths 38 which extend from the at least one lighting unit 34 to the flat mirror 4 (the outer boundaries of the area wherein such folded up light paths extend are indicated by dotted lines 15, 17, 19, 21 and the outer boundaries of the light paths without the light mirror 36 are indicated by dotted lines 23, 25, 19, 21). The light mirror 36 provides specular reflection of the light emitted by the lighting unit that reaches the object. As can be understood from figure 1, the lighting unit 34 is positioned in such a manner relative to the mirror 36 that light 16' which is submitted by the lighting unit 34, reaches the object 4 as if the lighting unit 34 would be positioned on a position where the lighting unit 14 is positioned when the mirror 36 is not present. A light path which extends from the lighting unit 34 to the object 4 is indicated by a light ray 16'. Because of the position of the lighting unit 34, the camera can be of a more compact design compared with the situation wherein the lighting unit 14 is present. Moreover, the length of the light path 16' will result in a more even light distribution over the object. Again it holds that the lighting unit directly submits light (via the light mirror 36) to the object 4. In this case the light is also reflected, but this reflection is specular reflection only.

The sensor 8 is provided with an optical axis 39. The optical axis 39 is the actual axis of the viewing field of the sensor 8 which has the shape of a cone.

As can be seen from figure 1, the lighting unit 34 is positioned within a lighting unit plane 40 which is perpendicular to the optical axis 39.

The lighting unit plane 40 lies between the sensor 8 and the virtual flat plane 32. It follows also from the above that the light rays 16'of the lighting unit 34 are submitted to the flat mirror 4 by means of specular reflection only.

It follows also from figure 1 that the mirror lies in a mirror plane 42 which is angled relative to the lighting unit plane 40.

It follows also that the mirror 36 lies between the lighting unit plane 40 and a sensor plane 44 extending through an outer surface 46 of the sensor 8 which outer surface 46 receives the light for recording. The sensor plane 44 is perpendicular to the optical axis 39. In figure 1 only one lighting unit 34 is provided which submits light via the mirror 36 to the object 4. It is however also possible that additional light sources and/or additional mirrors are provided for submitting light to the object 4 to be recorded wherein such additional lighting units are positioned outside the viewing angle of the sensor 8. It is also possible that the lighting unit submits light directly to the object 4 via additional lenses.

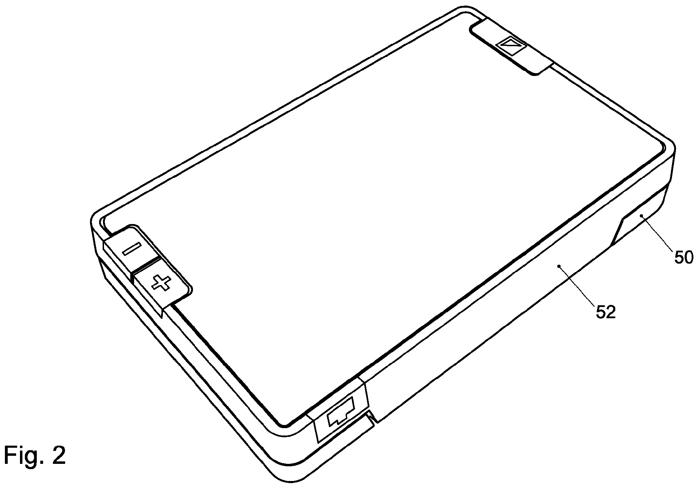

In figures 2-4 a practical embodiment of a portable magnifying camera 1' is provided working according to the same principal as discussed for figure 1. In figures 2-4 and figure 1, features which correspond with each other are provided with the same reference numbers.

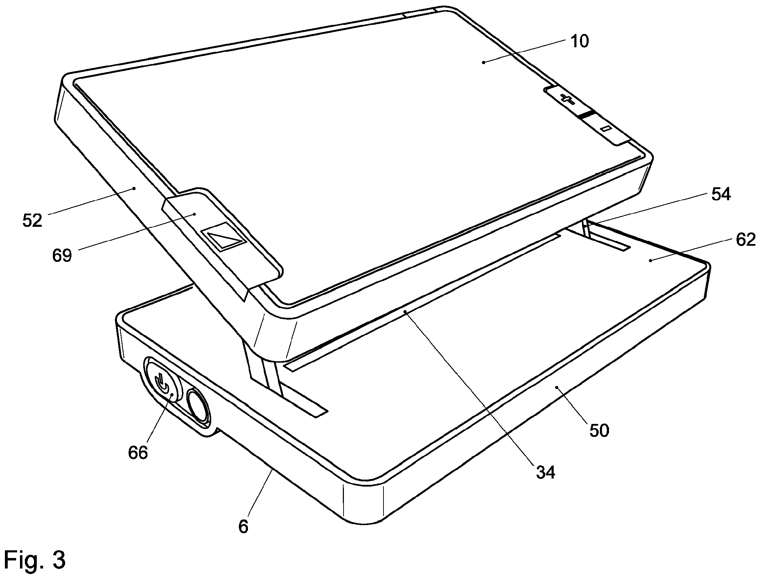

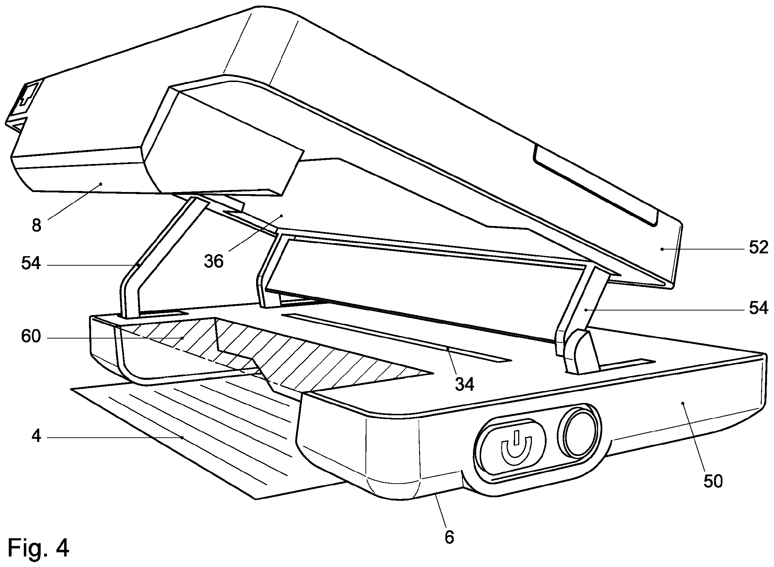

The portable magnifying camera is provided with a first body portion 50, a second body portion 52, and hinge means 54 for connecting the first body portion and the second body portion together. The first body portion can be moved relative to the second body portion between a folded condition as is shown in figure 2 and an unfolded working condition as is shown in figures 3 and 4. The unfolded working condition as shown in figures 3 and 4 is the condition for use of the camera. The second body portion 52 is provided with the sensor 8. The first body portion is provided with the lighting unit 34 which in this example is formed by a longitudinal array of LED's. In the working condition there is a distance between the first body portion 50 and the second body portion 52. The first body portion is arranged to be positioned on the object 4 to be recorded. The object 4 can for example be a piece of paper lying on a table. The first body portion 50 comprises the outer lower surface 6 as can be seen in figure 4. If the camera is in the unfolded condition, in use, the second body portion extends above the first body portion. The light mirror 36 is formed by an outer surface of the second body portion. If the camera is in the unfolded condition, the light mirror 36 faces downwardly as will be clear from figure 4. The lighting unit 34 is arranged to submit light in a direction of the second body portion if the camera is in the unfolded condition. This light is reflected by the light mirror 36 and submitted to the object which is schematically shown in figure 4 by a plurality of lines. The second body portion is further provided with the display 10. The display and the mirror lie in opposite sides of the second body portion 52.

Furthermore, the processing means 12 can be arranged in the first body portion 50 and/or the second body portion 52. As becomes clear from figures 3 and 4, the first body portion and the second body portion each have an overall shape of a flat rectangular plate. The first body portion has the same overall shape and size as the second body portion. Furthermore, the first body portion is provided with an opening 60 for recording the object 4. Basically the opening 60 provides that the first body portion 50 has somewhat the shape of a U. The opening 60 is indicated by a plurality of lines.

The position of the sensor 8, the mirror 36, the lighting unit 34, and the outer surface 6 in working condition of the practical embodiment as shown in figures 3- and 4 functions the same as discussed for figure 1. Also in the apparatus magnifying camera according to figures 3 and 4 the lighting unit 34 is located outside the viewing field of the sensor 8 if the object 4 would be a flat mirror.

As is shown in figure 2, in a folded condition the first and the second body portion abut against each other. In that condition the mirror 36 abuts a second outer surface 62 of the first body part 50 which second outer surface 62 lies opposite the lower outer surface 6 of the first body portion which, in use, is in contact with the object to be recorded. In this example, the portable magnifying camera is further provided with a button marked "- " and a button marked "+". If the button "+" is operated the image of the object 4 is zoomed in on the display. If the button "- " is operated, a zooming out function will be executed. Furthermore, the apparatus is provided with a button 64 for adjusting the brightness of the image which is displayed on the display 10. Also the camera is provided with a power on/off button 66.

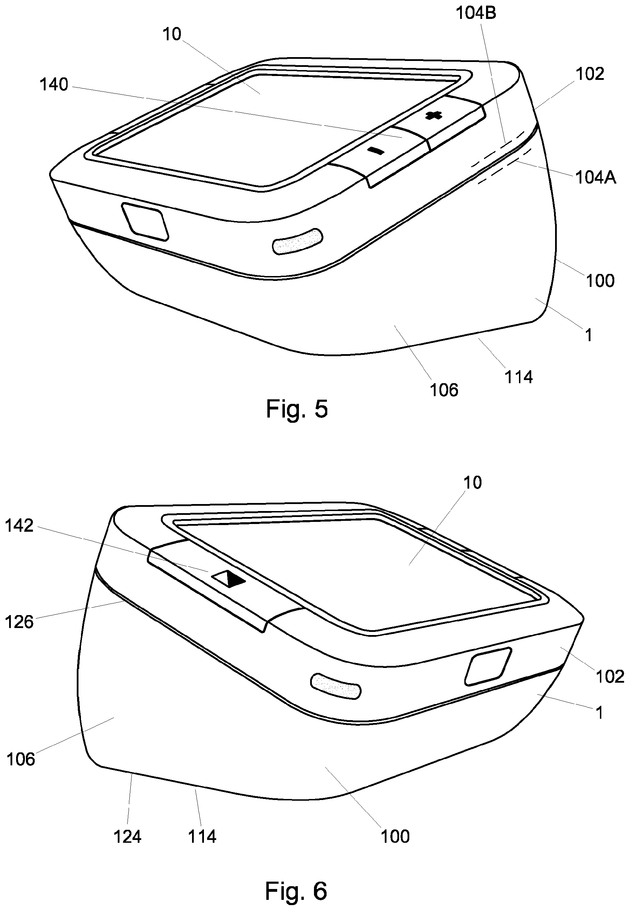

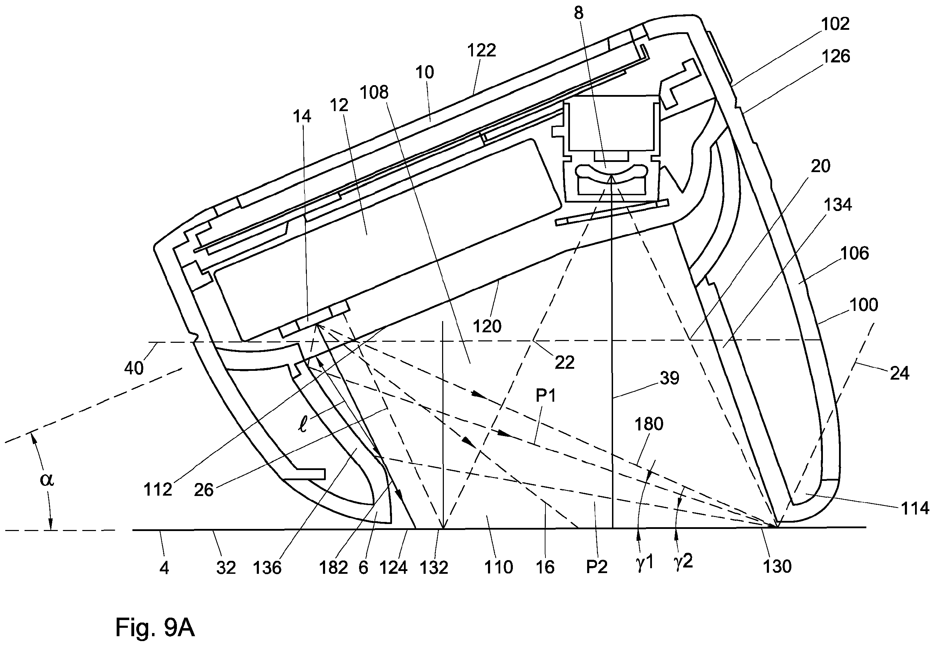

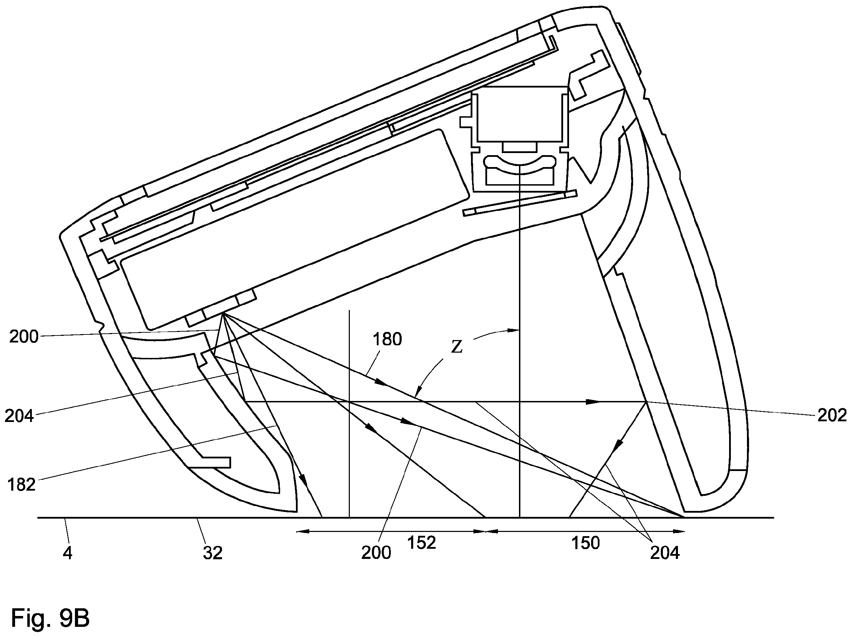

Based on Figures 5-11 an alternative embodiment of a camera according to the invention is described. In the figures corresponding elements are provided with the same reference numbers. Figures 9A, 9B show different features of the same embodiment.

The camera according to figures 5-11 is also arranged to be positioned on an object to be recorded. The camera is provided with an outer lower surface 6 which is arranged to be in contact with the object if the camera is positioned on the object. Again the camera is provided with the light sensitive sensor for obtaining an image of at least a portion of the object, a display and processing means 12 for processing the image obtained by means of the sensor and for displaying at least a portion of the recorded image on the display 10.

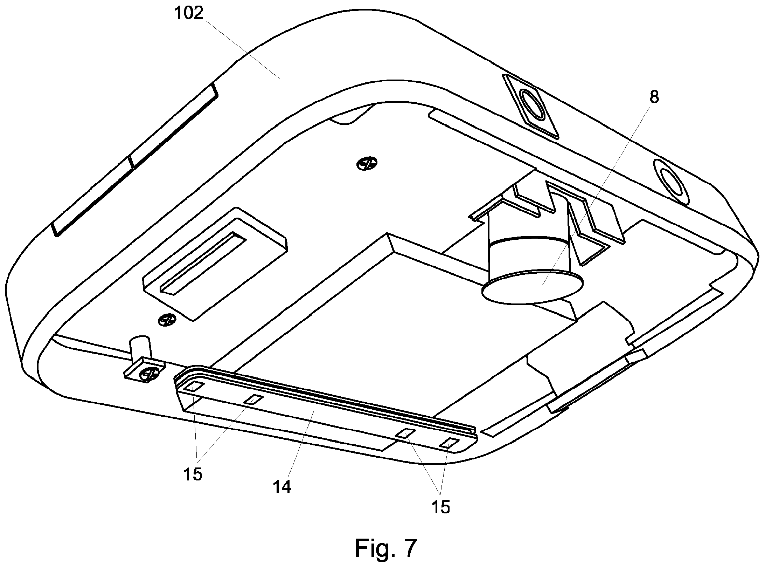

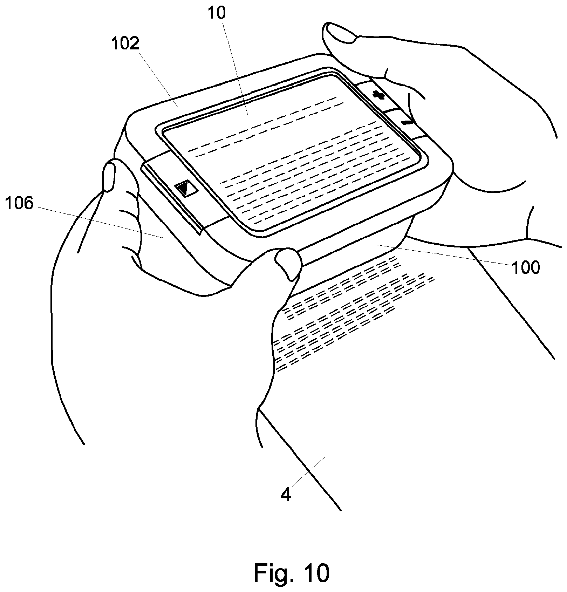

The camera is further provided with a first body portion 100, a second body portion 102 and means for connecting and disconnecting the first body portion and the second body portion. The means 104 for connecting and disconnecting the first body portion 100 and second body portion 102 may for example comprise magnets. As schematically indicated, the first body portion 100 may be provided with a first magnet 104A wherein the second body portion 102 is provided with a second magnet 104B wherein in figure 5 the magnets generate such forces that the first body portion 100 and the second body portion 102 are forced towards each other but can be separated from each other by hand. Figure 7 shows a bottom view of the second body portion 102 which is separated from the first body portion. As is shown in figure 7 the second body portion is provided with a lighting unit 14 which is provided, in this example, with four LED's 15. The four LED's 15 form a so called LED-strip. Furthermore the second body portion is provided with a light sensitive sensor 8, for example, a CCD or CMOS. Other types of sensors are however also possible. Furthermore, the second body portion is provided with a display 10. The first body portion 100 is arranged to be positioned on an object 4 to be recorded while the second body portion is connected with a first body portion. This situation is shown in figure 10 wherein the object to be recorded is a piece of paper. In use, the first body portion 100 provides a fixed distance between the second body portion 102 and the object 4 to be recorded as becomes clear from figure 10. In order to enable the recording the first body portion is provided with a side wall 106 surrounding an inner space 108 of the first body portion 100. Also the first body portion comprises a first opening 110 and a second opening 112 lying opposite to each other and providing visible access to the inner space 108. If the first body portion and the second body portion are connected together as is shown in figure 10, the second opening 112 faces the second body portion 102. Moreover, in use, in that case the first opening 110 faces the object 4 to be recorded such that the sensor 8 can capture an image of the object to be recorded via the second opening 112, the inner space 108, and the first opening 110. The first body portion comprises the outer lower surface 6 which is arranged to be in contact with the object 4 if the camera is positioned on the object. The outer lower surface 6 is made flat and is provided with rounded edges which are adjacent to the surrounding side wall 106 for easy sliding over the object 4. The first body portion 100 may, for example, be made from a plastic material. Other materials are also possible. For the sake of clarity it is indicated that the outer lower surface 6 comprises the first opening 110. As becomes clear from figures 5, 6, 9 and 10, the display is inclined relative to the outer lower surface 6 if the second body portion is connected with the first body portion. This has as a result, as is shown in figure 10, that if the object to be recorded lies in a horizontal plane while the portable camera is positioned on a horizontal surface of the object, the display is facing the user which makes it easy for the user to see the content of which is displayed.

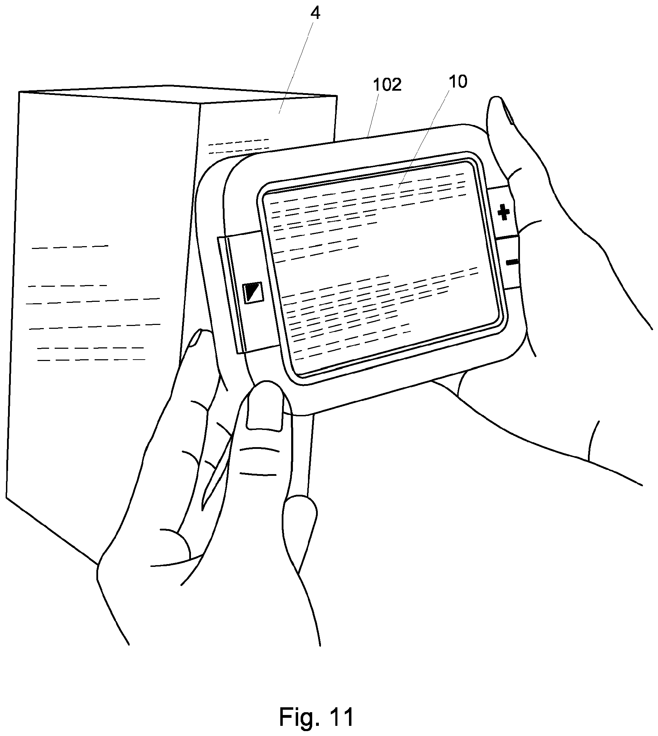

It is however also possible to disconnect the first body portion and the second body portion from each other so that the second body portion can be used as a hand-held camera. In that case, by means of the sensor 8, an image is captured from the object 4 which is shown on the display 10. This image may be processed by the processing means 12, for example for magnifying the image. At the same time the object 4 may be enlightened by means of the lighting unit 14 for improving the image of the object 4. If the second body portion 102 is hand-held such as shown in figure 11, it is also possible to display an image of the environment of the user, simply by panning the second body portion.

If on the other hand the first body portion and the second body portion are connected to each other, an image of the object 4 can be provided on the display 10 as is shown in figure 10. Also in that case by means of the processing means 12, the image can be processed, for example, for magnifying the image, adapting the resolution of the image, modifying the contrast or intensity of the image etc.

Because, as is shown in figure 10 the first body portion provides a fixed distance between the second body portion and the object to be recorded it is possible to provide an image of the object with a very high predetermined stable quality. Moreover other features of the camera according to the invention even further improve the quality of the image. As becomes clear from figure 6, the inner space 108 is completely surrounded by the side wall 106 wherein the opening 110 is in fact closed by the object 4 and the opening 112 is closed by the second body portion. This means that the portion of the object to be recorded is not enlightened by daylight. However the portion of the object to be recorded is enlightened by means of the lighting means 14. This has as an advantage that the enlightening of the object is of a predetermined level and nature so that the obtained image can be optimal. As discussed in relation with the embodiment according to figures 1-4, it also holds in that case that the lighting unit 14 lies outside the viewing field of the camera which viewing field is obtained if the object 4 would be replaced by a perfect mirror (see figure 5). Again this viewing field is indicated by dotted lines 20, 22, 24, 26. This means that, as discussed above, if the object 4 would be glossy the camera 8 will not "see" via the glossy object the image of the lighting unit itself.

As is shown in figure 9, the sensor 8 is provided with an optical axis 116 which intersects the first opening 110 at least substantially in its center. Clearly in this way a good image can be obtained from the portion of the object which is visible through the first opening 110. Furthermore it holds that the at least one lighting unit 14 is positioned within a lighting unit plane 40 which is perpendicular to the optical axis 39 wherein the lighting unit plane 40 lies between the sensor 8 and the outer lower surface 6. Thus the camera has a relatively large distance to the lower surface for obtaining a larger image of the object wherein the lighting unit lies relatively close to the lower surface for providing a good illumination of the object. Because on the one hand the display 10 is tilted wherein the lighting unit and the sensor have a position relative to each other as discussed above it is at the same time realized that the second body portion is provided with a first side 120 and a second side 122 extending substantially parallel to each other wherein the second side comprises a display 10. In use, the first side faces the first body portion if the first body portion is connected to the second body portion. Also it holds that the second body portion has an overall shape of a flat and rectangular plate which enables easy hand-held use as is shown in figure 11. At the same time, as will be clear by now, the first body portion is provided with a first side 124 and a second side 126 extending at an angle α relative to each other wherein the first side comprises the first opening 110 and the second side 126 comprises the second opening 112. The first side of the second body portion faces the second side 122 of the first body portion if the first body portion is connected to the second body portion.

Thus the tilting of the display is realized by the first body portion so that the second body portion when disconnected from the first body portion can have a rectangular shape as discussed above.

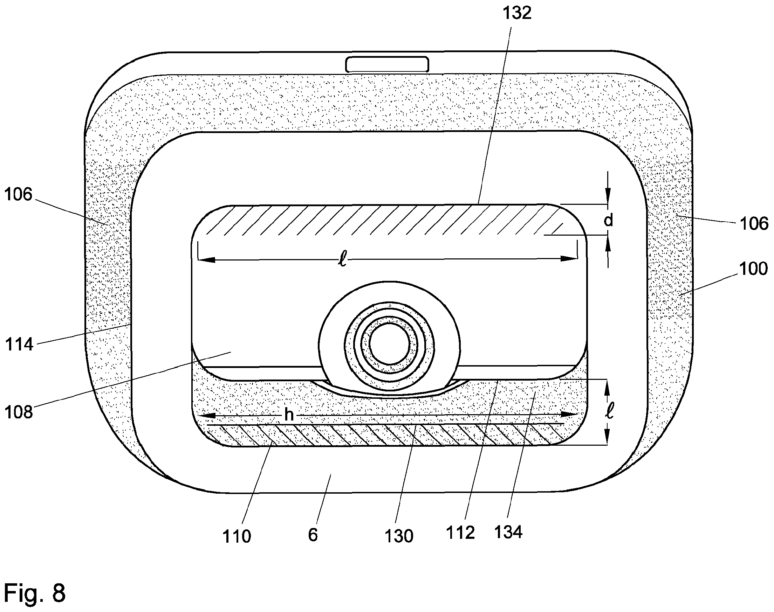

As becomes clear from figure 9A, 9B (same embodiment with different features shown) the lighting unit 14 submits light rays 16 directly towards the opening 110. Because, as is shown in figure 9, the lighting unit 14 is positioned on the left-hand side, this may mean that the rectangular area 130 having a width d and a length 1 as is shown in figure 8 wherein this area is shown in shaded form, receives light having a smaller intensity than light received by other areas which are more close to the lighting unit 14. As a result of this, the shaded area 130 (laying in a virtual flat plane 32 through the opening and coinciding with the outer lower surface 6) may be directly illuminated by the lighting unit 14 with an intensity which is considerably lower than for example the intensity by which the rectangular area 132 (also laying in a virtual plane through the opening and coinciding with the outer lower surface 6) is directly illuminated as shown in figure 8. Thus the intensity of direct received light (see for example light ray 180 in figure 9B) in the area 130 is lower than the intensity of direct received light in the area 132 (see for example light ray 182 in figure 9B). This is due to the fact that the distance between the area 130 and the lighting unit is larger than the distance between the area 132 and the lighting unit. This is also caused by the fact that the direction of for example the light ray 180 relative to the area 130 differs from the direction of for example the light ray 182 relative to the area 132 (the light ray 180 has a larger angle z relative a normal of the virtual plane than the light ray 182). Thus the intensity wherein the area 130 is directly illuminated (for example measured in Lux) is lower than the intensity wherein the area 132 is directly illuminated. Thus without other ways of enlightening the intensity wherein the area 130 is enlightened may for example be 20% of the intensity wherein the area 132 is enlightened. In order to enlighten the portion of the object 4 which is visible through the opening 110 with a more equal light distribution, an inner surface 134 is provided with a curved portion 136. This curved portion extends upwards along the arrow as is shown in figure 9 and extends horizontally along the arrow h as shown in figure 8. This portion is arranged such that in use, it reflects some of the light emitted by the lighting unit towards the first opening if the first body portion is connected to the second body portion. In this way, an additional amount of light is submitted to the opening for providing in combination with the light which is submitted directly to the opening, a more evenly spread illumination of the object which is visible through the opening. In this example the area 130 may be illuminated by means of all light received (directly received light and light received after reflection(s)) with an intensity in the area 130 (again may be measured in Lux) which is 65 % of the intensity by which the area 132 is illuminated by means of all light received (directly received light and light received after reflection(s)). In an example not covered by the claims, the portion of the inner surface is arranged such that the portion of the light emitted by the lighting unit which is reflected by the portion of the inner surface is reflected in a diffused manner. For this, the portion 136 can have a well-known roughened structure.

It becomes clear from figure 9A, 9B that the distance between the lighting unit and the portion 136 of the curved inner surface is smaller than a distance between the sensor and the portion of the curved inner surface. Moreover, the portion 136 is arranged such that the portion of the light emitted by the lighting unit which is reflected by the portion 136 of the inner surface is reflected towards an area 130 of the first opening having a larger distance to the lighting unit than other areas 132 of the first opening.

This reflection towards the area 130 may be directly as is shown by light ray 200 of may be indirectly by means of a reflection on another portion 202 of the inner surface as is shown by light ray 204 (see figure 9B).

More particularly it holds that the portion of the inner surface is arranged such that the portion of the light emitted by the lighting unit which is reflected by the portion of the inner surface is reflected towards an area 130 of the first opening having a larger distance to the lighting unit than each other area of the first opening. The above may also hold for other areas such as shown in figure 9B. In figure 9B the area 150 of the first opening having a larger distance to the lighting unit than other areas forms a first half of the first opening and the other areas form a second half 152 of the first opening wherein the first half and the second half in combination form the first opening.

It further holds that the portion of the inner surface is arranged such that the portion of the light emitted by the lighting unit which is reflected by the portion of the inner surface has a larger intensity on the position of the first opening having a larger distance to the lighting unit than other positions of the first opening. This position may, for example, lie within the area 130 whereas the other positions lie outside this area.

It further holds that the portion 136 is arranged such that the portion of the light emitted by the lighting unit which is reflected by the portion of the inner surface increases the intensity of the light more in a first area 130 of the first opening than in a second area 132 of the first opening wherein the intensity of the light in the first area as a result of the light which is directly received from the lighting unit in the first area 130 is lower than the intensity of the light in the second area as a result of the light which is directly received from the lighting unit in the second area 132. This also holds for other selections of areas such as shown in figure 9B. There it holds that the portion 136 is arranged such that the portion of the light emitted by the lighting unit which is reflected by the portion of the inner surface increases the intensity of the light more in a first area 150 of the first opening than in a second area 152 of the first opening wherein the intensity of the light in the first area as a result of the light which is directly received from the lighting unit in the first area 150 is lower than the intensity of the light in the second area as a result of the light which is directly received from the lighting unit in the second area 152. In this case the first area and the second are each form a half of the first opening and wherein the first area and the second area in combination form the first opening.

Thereby it is clear that the light reflected by the portion 136 compensates intensity differences between different areas as a result of the direct lighting of these areas by means of the lighting unit 14. In other words it holds that the light rays emitted by the lighting unit which directly illuminates a plane laying in the first opening provide a first distribution of light intensity in the plane 32 which is not uniform spread over this plane wherein the portion of the inner surface is arranged such that the portion of the light emitted by the lighting unit which is reflected by the portion of the inner surface provides in combination with the light rays which are directly received in the plane a total distribution of light intensity in the plane 32 which is more uniform spread over this plane than the first distribution.

This feature of the embodiment of the invention may be further described as follows. The first opening is provided with a first edge 150 and a second edge 152 laying opposite to each other. In fact the first opening is further provided with two opposites edges 154, 156 wherein the edges 150-156 provide the first opening with a rectangular shape. The lighting unit directly illuminates the the plane 32 through the first opening adjacent the first edge 150 with an intensity which is higher than the intensity whereby the plane adjacent the second edge 152 is directly illuminated by the lighting unit. Furthermore the portion of the inner surface is arranged such that the portion of the light emitted by the lighting unit which is reflected by the portion of the inner surface illuminates the plane adjacent the first edge 150 with an intensity which is lower than the intensity by which the plane adjacent the second edge 152 is illuminated by the lighting unit via the portion of the inner surface. The portion of the inner surface is arranged such that the portion of the light emitted by the lighting unit which is reflected by the portion of the inner surface is mainly reflected in predetermined directions wherein each of the predetermined directions p (p1, p2) and the outer lower surface enclose an angle γ1, γ2 which is smaller than 90°, preferably smaller than 60° and more preferable smaller than 45° (see figure 9A).

The example is in no matter limited to the disclosed embodiments. Clearly the angle α may have other values as shown in figure 9A. For example the angle α may be around 40° or even 45°. In this example the lighting unit is positioned outside the viewing field defined by dotted lines 20, 22, 24, 26. It is however also possible that the lighting unit is placed within the viewing field defined by these lights. Of course in that case glare may occur but the camera has still the advantage that the first body portion and the second body portion can be separated from each other so that the second body portion can be used as a hand-held camera.

Also the portable camera may be provided with zoom buttons 140 (figure 5) and mode buttons 142. By means of the zoom buttons the amount of magnification (zoom-in and zoom-out) may be varied. By means of the mode buttons it is for example possible to, in combination with the zoom buttons 114 to vary the light intensity of the lighting unit, the contrast of the displayed image, the intensity of the displayed image, etc. In this example the first and second body portion are connected to each other by means of magnets. Other coupling means are possible such as mechanical coupling means for example a bayonet closure. These variations fall within the scope of the invention as defined by the appended claims.

In this example the portable magnifying cameras are arranged for recording streaming video of the object 4 and displaying same on the display 10. This means that if the object is moved relative to the camera, a moving image of the object will be displayed on the display 10. It is however also possible that photos of the object 4 are made and displayed on the display 10.

Furthermore, according to the invention it is possible that the processing means are arranged for recognizing words on the object and converting recognized words into spoken text. The spoken text can be outputted to, for example, a head phone which is connected to the camera. Additionally or alternatively, a Braille display may be operated by means of the camera if the processing means are arranged to recognize words on the object. In accordance with the invention it is also possible that the portable camera is not provided with a display 10. In that case, the processing means 12 may be arranged for converting recognized text on the object into speech as indicated above. These variations fall within the scope of invention as defined by the appended claims.

## Claims

1. A portable camera (1) for recording an image of an object (4) such as printed paper, wherein the camera is arranged to be positioned on the object to be recorded,
wherein the camera is provided with an outer lower surface (6) which is arranged to be in contact with the object if the camera is positioned on the object, a light sensitive sensor (8) for obtaining an image of at least a portion of the object, and processing means (12) for processing the image obtained by means of the sensor, wherein the camera is provided with at least one lighting unit (14, 34) for lighting the object to be recorded when the camera is positioned on the object, wherein the at least one lighting unit is arranged within the camera on a position relative to the sensor such that if the object which is recorded would be a flat mirror whereon the camera is positioned for recording the reflective surface of the flat mirror, the at least one lighting unit is placed in an area where the sensor cannot see the at least one lighting unit and the at least one lighting unit is located outside a viewing field of the sensor which viewing field is formed in combination with the flat mirror, **characterized in that**, the camera is arranged such that light rays of the at least one lighting unit which are, in use, submitted to the object are not diffused, and are submitted to the object via at least one light mirror of the camera by means of specular reflection only and/or via at least one lens by means of specular transmission only.

2. A portable camera according to claim 1, **characterized in that** the outer lower surface is flat.

3. A portable camera according to any one of the preceding claims, **characterized in that** the object is positioned against the outer lower surface.

4. A portable camera according to any one of the preceding claims, **characterized in that** the camera is provided with the at least one light mirror, and the the at least one light mirror is arranged for folding up the light path which extends from the at least one lighting unit to the object.

5. A portable camera according to claim 4, **characterized in that** the sensor is provided with an optical axis (39), wherein, in use, the at least one lighting unit is positioned within a lighting unit plane which is perpendicular to the optical axis, and wherein the at least one lighting unit plane lies between the sensor and the outer lower surface.

6. A portable camera according to claim 5, **characterized in that**, in use the light mirror lies in a mirror plane which is angled relative to the lighting unit plane.

7. A portable camera according to claim 6, **characterized in that** the light mirror lies between the lighting unit plane (40) and a sensor plane (44) extending through an outer surface of the sensor which receives light for recording the image, wherein the sensor plane is perpendicular to the optical axis.

8. A portable camera according to any one of the preceding claims, **characterized in that** the camera is provided with a first body portion (50), a second body portion (52) and a hinge means (54) for connecting the first body portion and the second body portion together wherein the first body portion can move relative to the second body portion between a folded condition and an unfolded working condition for use of the camera, wherein the second body portion is provided with the sensor and the first body portion is provided with the at least one lighting unit, and wherein in the unfolded working condition there is a distance between the first body portion and the second body portion.

9. A portable camera according to claim 8, **characterized in that** the first body portion is arranged to be positioned on the object to be recorded.

10. A portable camera according to claim 9, **characterized in that** the first body portion comprises the outer lower surface.

11. A portable camera according to any one of the preceding claims 8-10, **characterized in that** the at least one lighting unit is arranged to submit light in a direction of the second body portion if the camera is in the unfolded working condition.

12. A portable camera according to any one of the preceding claims 8-11, **characterized in that** if the camera is in the unfolded working condition, in use, the second body portion extends above the first body portion.

13. A portable camera according to any one of preceding claims 8-12 when dependent on claim 4, **characterized in that** the light mirror is formed by an outer surface of the second body portion wherein, if the camera is in the unfolded working condition, in use, the light mirror faces downwardly.

14. A portable camera according to any one of the preceding claims, **characterised in that** the camera comprises a display (10), wherein the processing means for processing the image obtained by means of the sensor is arranged for displaying at least a portion of the recorded image on the display.

15. A portable camera according to claim 14, **characterized in that** the processing means is arranged for selective magnification of the image to be displayed on the display (10).

16. A portable camera according to claim 14 or 15, when dependent on claim 4 and any one of claims 8-13, **characterized in that** the second body portion is provided with the display (10), wherein the display and the light mirror lie on opposite sides of the second body portion.

17. A portable camera according to any one of preceding claims 8-16, **characterized in that** in the folded condition the first and the second body portion abut against each other.

18. A portable camera according to any one of preceding claims 8-17 when dependent on claim 4, **characterized in that** in the folded condition the light mirror abuts a second outer surface of the first body portion which lies opposite the outer lower surface of the first body portion which, in use, is in contact with the object to be recorded.

19. A portable camera according to any one of preceding claims 8-18, **characterized in that** the first body portion and the second body portion each have an overall shape of a flat rectangular plate wherein preferably the first body portion has the same overall shape and size as the second body portion.

20. A portable camera according to claim 19, **characterized in that** the first body portion is provided with an opening for recording the object.

21. A portable camera according to claim 14 or 15 when not dependent on any of claims 8-13,
**characterized in that** the camera is provided with a first body portion (100), a second body portion (102) and a means (104) for connecting and disconnecting the first body portion and the second body portion, wherein the second body portion is provided with the at least one lighting unit, the sensor and the display (10), wherein the first body portion is arranged to be positioned on the object to be recorded while the second body portion is connected with the first body portion such that, in use, the first body portion provides a fixed distance between the second body portion and the object to be recorded wherein the first body portion is provided with a side wall (106) surrounding an inner space (108) of the first body portion and a first and second opening (110, 112) lying opposite to each other and providing visible access to the inner space, and wherein, if the first body portion and the second body portion are connected together, the second opening faces the second body portion and the first opening, in use, faces the object to be recorded such that the sensor can capture an image of the object to be recorded via the second opening, the space and the first opening.

22. A portable camera according to claim 21, **characterized in that** the first body portion comprises the outer lower surface.

23. A portable camera according to claim 22, **characterized in that** the outer lower surface comprises the first opening.

24. A portable camera according to claim 22 or 23, **characterised in that** the display is inclined relative to the outer lower surface if the second body portion is connected with the first body portion.

25. A portable camera according to claim 23 or 24, **characterized in that** if the first body portion is connected to the second body portion a distance between the at least one lighting unit and the outer lower surface is smaller than a distance between the sensor and the outer lower surface.

26. A portable camera according to any one of the preceding claims 21-25 when not dependent on claim 5, **characterized in that** the sensor is provided with an optical axis (39) which intersects a flat plane through the first opening in substantially a centre of the first opening.

27. A portable camera according to any one of the preceding claims, **characterized in that** the processing means is arranged for extracting text from the object and for converting extracted text into speech.

## Patentansprüche

1. Tragbare Kamera (1) zum Aufzeichnen eines Bildes eines Objekts (4), wie bedrucktes Papier, wobei die Kamera so angeordnet ist, dass sie auf dem aufzuzeichnenden Objekt positioniert werden kann,
wobei die Kamera mit einer äußeren unteren Fläche (6), die so angeordnet ist, dass sie mit dem Objekt in Kontakt ist, wenn die Kamera auf dem Objekt positioniert ist, einem lichtempfindlichen Sensor (8) zum Erhalten eines Bildes von wenigstens einem Abschnitt des Objekts, und Verarbeitungsmitteln (12) zum Verarbeiten des mittels des Sensors erhaltenen Bildes versehen ist, wobei die Kamera mit wenigstens einer Beleuchtungseinheit (14, 34) zum Beleuchten des aufzuzeichnenden Objekts, wenn die Kamera auf dem Objekt positioniert ist, versehen ist, wobei die wenigstens eine Beleuchtungseinheit innerhalb der Kamera an einer Position relativ zu dem Sensor angeordnet ist, so dass, wenn das Objekt, das aufgezeichnet wird, ein Flachspiegel wäre, auf dem die Kamera zum Aufzeichnen der reflektierenden Oberfläche des Flachspiegels positioniert ist, die wenigstens eine Beleuchtungseinheit in einem Bereich angeordnet ist, in dem der Sensor die wenigstens eine Beleuchtungseinheit nicht sehen kann, und die wenigstens eine Beleuchtungseinheit sich außerhalb eines Sichtfeldes des Sensors befindet, wobei das Sichtfeld in Kombination mit dem Flachspiegel gebildet wird, **dadurch gekennzeichnet, dass** die Kamera so angeordnet ist, dass Lichtstrahlen der wenigstens einen Beleuchtungseinheit, die im Gebrauch dem Objekt zugeführt werden, nicht gestreut werden und dem Objekt über wenigstens einen Lichtspiegel der Kamera nur mittels Spiegelreflexion und/oder über wenigstens eine Linse nur mittels Spiegeltransmission zugeführt werden.

2. Tragbare Kamera nach Anspruch 1, **dadurch gekennzeichnet, dass** die äußere untere Fläche flach ist.

3. Tragbare Kamera nach einem der vorhergehenden Ansprüche, **dadurch gekennzeichnet, dass** das Objekt gegen die äußere untere Fläche positioniert ist.

4. Tragbare Kamera nach einem der vorhergehenden Ansprüche, **dadurch gekennzeichnet, dass** die Kamera mit dem wenigstens einen Lichtspiegel versehen ist, und
der wenigstens eine Lichtspiegel zum Hochklappen des Lichtweges, der sich von der wenigstens einen Beleuchtungseinheit zum Objekt erstreckt, angeordnet ist.

5. Tragbare Kamera nach Anspruch 4, **dadurch gekennzeichnet, dass** der Sensor mit einer optischen Achse (39) versehen ist, wobei die wenigstens eine Beleuchtungseinheit im Gebrauch innerhalb einer Beleuchtungseinheitsebene positioniert ist, die senkrecht zur optischen Achse liegt, und wobei die wenigstens eine Beleuchtungseinheitsebene zwischen dem Sensor und der äußeren unteren Fläche hegt.

6. Tragbare Kamera nach Anspruch 5, **dadurch gekennzeichnet, dass** der Lichtspiegel im Gebrauch in einer Spiegelebene liegt, die relativ zu der Beleuchtungseinheitsebene abgewinkelt ist.

7. Tragbare Kamera nach Anspruch 6, **dadurch gekennzeichnet, dass** der Lichtspiegel zwischen der Beleuchtungseinheitsebene (40) und einer Sensorebene (44) liegt, die sich durch eine äußere Fläche des Sensors erstreckt, der Licht zum Aufzeichnen des Bildes empfängt, wobei die Sensorebene senkrecht zur optischen Achse liegt.

8. Tragbare Kamera nach einem der vorhergehenden Ansprüche, **dadurch gekennzeichnet, dass** die Kamera mit einem ersten Körperabschnitt (50), einem zweiten Körperabschnitt (52) und einem Scharniermittel (54) zum Verbinden des ersten Körperabschnitts und des zweiten Körperabschnitts miteinander versehen ist, wobei der erste Körperabschnitt relativ zu dem zweiten Körperabschnitt zwischen einem zusammengeklappten Zustand und einem aufgeklappten Arbeitszustand zur Verwendung der Kamera bewegt werden kann, wobei der zweite Körperabschnitt mit dem Sensor versehen ist und der erste Körperabschnitt mit der wenigstens einen Beleuchtungseinheit versehen ist, und wobei in dem aufgeklappten Arbeitszustand ein Abstand zwischen dem ersten Körperabschnitt und dem zweiten Körperabschnitt vorhanden ist.

9. Tragbare Kamera nach Anspruch 8, **dadurch gekennzeichnet, dass** der erste Körperabschnitt so angeordnet ist, dass er auf dem aufzuzeichnenden Objekt positioniert werden kann.

10. Tragbare Kamera nach Anspruch 9, **dadurch gekennzeichnet, dass** der erste Körperabschnitt die äußere untere Fläche umfasst.

11. Tragbare Kamera nach einem der vorhergehenden Ansprüche 8 bis 10, **dadurch gekennzeichnet, dass** die wenigstens eine Beleuchtungseinheit so angeordnet ist, dass sie Licht in eine Richtung des zweiten Körperabschnitts zuführt, wenn sich die Kamera im aufgeklappten Arbeitszustand befindet.

12. Tragbare Kamera nach einem der vorhergehenden Ansprüche 8 bis 11, **dadurch gekennzeichnet, dass**, wenn sich die Kamera im aufgeklappten Arbeitszustand befindet, sich der zweite Körperabschnitt im Gebrauch über den ersten Körperabschnitt erstreckt.

13. Tragbare Kamera nach einem der vorhergehenden Ansprüche 8 bis 12, wenn sie von Anspruch 4 abhängt, **dadurch gekennzeichnet, dass** der Lichtspiegel durch eine äußere Fläche des zweiten Körperabschnitts gebildet wird, wobei der Lichtspiegel im Gebrauch nach unten zeigt, wenn sich die Kamera im aufgeklappten Arbeitszustand befindet.

14. Tragbare Kamera nach einem der vorhergehenden Ansprüche, **dadurch gekennzeichnet, dass** die Kamera ein Display (10) umfasst, wobei das Verarbeitungsmittel zur Verarbeitung des mittels des Sensors erhaltenen Bildes zur Anzeige wenigstens eines Teil des aufgezeichneten Bildes auf dem Display angeordnet ist.

15. Tragbare Kamera nach Anspruch 14, **dadurch gekennzeichnet, dass** das Verarbeitungsmittel für eine selektive Vergrößerung des auf dem Display (10) anzuzeigenden Bildes angeordnet ist.

16. Tragbare Kamera nach Anspruch 14 oder 15, wenn sie von Anspruch 4 und einem der Ansprüche 8 bis 13 abhängt, **dadurch gekennzeichnet, dass** der zweite Körperabschnitt mit dem Display (10) versehen ist, wobei das Display und der Lichtspiegel auf gegenüberliegenden Seiten des zweiten Körperabschnitts liegen.

17. Tragbare Kamera nach einem der vorhergehenden Ansprüche 8 bis 16, **dadurch gekennzeichnet, dass** im zusammengeklappten Zustand der erste und der zweite Körperabschnitt aneinander anliegen.

18. Tragbare Kamera nach einem der vorhergehenden Ansprüche 8 bis 17, wenn sie von Anspruch 4 abhängt, **dadurch gekennzeichnet, dass** der Lichtspiegel im zusammengeklappten Zustand an einer zweiten äußeren Fläche des ersten Körperabschnitts anliegt, die der äußeren unteren Fläche des ersten Körperabschnitts gegenüberliegt, die im Gebrauch mit dem aufzuzeichnenden Objekt in Kontakt ist.

19. Tragbare Kamera nach einem der vorhergehenden Ansprüche 8 bis 18, **dadurch gekennzeichnet, dass** der erste Körperabschnitt und der zweite Körperabschnitt jeweils die Gesamtform einer flachen rechteckigen Platte aufweisen, wobei der erste Körperabschnitt vorzugsweise die gleiche Gesamtform und Größe wie der zweite Körperabschnitt aufweist.

20. Tragbare Kamera nach Anspruch 19, **dadurch gekennzeichnet, dass** der erste Körperabschnitt mit einer Öffnung zum Aufzeichnen des Objekts versehen ist.

21. Tragbare Kamera nach Anspruch 14 oder 15, wenn sie nicht von einem der Ansprüche 8 bis 13 abhängt, **dadurch gekennzeichnet, dass** die Kamera mit einem ersten Körperabschnitt (100), einem zweiten Körperabschnitt (102) und einem Mittel (104) zum Verbinden und Trennen des ersten Körperabschnitts und des zweiten Körperabschnitts versehen ist, wobei der zweite Körperabschnitt mit der wenigstens einen Beleuchtungseinheit, dem Sensor und dem Display (10) versehen ist, wobei der erste Körperabschnitt so angeordnet ist, dass er auf dem aufzuzeichnenden Objekt positioniert wird, während der zweite Körperabschnitt mit dem ersten Körperabschnitt verbunden ist, so dass im Gebrauch, der erste Körperabschnitt einen festen Abstand zwischen dem zweiten Körperabschnitt und dem aufzuzeichnenden Objekt bereitstellt, wobei der erste Körperabschnitt mit einer Seitenwand (106), die einen Innenraum (108) des ersten Körperabschnitts umgibt, und einer ersten und einer zweiten Öffnung (110, 112) versehen ist, die einander gegenüberliegen und einen sichtbaren Zugang zu dem Innenraum bereitstellen, und wobei, wenn der erste Körperabschnitt und der zweite Körperabschnitt miteinander verbunden sind, die zweite Öffnung zu dem zweiten Körperabschnitt zeigt und die erste Öffnung im Gebrauch zu dem aufzuzeichnenden Objekt zeigt, so dass der Sensor ein Bild des aufzuzeichnenden Objekts über die zweite Öffnung, den Raum und die erste Öffnung erfassen kann.

22. Tragbare Kamera nach Anspruch 21, **dadurch gekennzeichnet, dass** der erste Körperabschnitt die äußere untere Fläche umfasst.

23. Tragbare Kamera nach Anspruch 22, **dadurch gekennzeichnet, dass** die äußere untere Fläche die erste Öffnung umfasst.

24. Tragbare Kamera nach Anspruch 22 oder 23, **dadurch gekennzeichnet, dass** das Display relativ zu der äußeren unteren Fläche geneigt ist, wenn der zweite Körperabschnitt mit dem ersten Körperabschnitt verbunden ist.

25. Tragbare Kamera nach Anspruch 23 oder 24, **dadurch gekennzeichnet, dass**, wenn der erste Körperabschnitt mit dem zweiten Körperabschnitt verbunden ist, ein Abstand zwischen der wenigstens einen Beleuchtungseinheit und der äußeren unteren Fläche kleiner ist als ein Abstand zwischen dem Sensor und der äußeren unteren Fläche.

26. Tragbare Kamera nach einem der vorhergehenden Ansprüche 21 bis 25, die
wenn sie nicht von Anspruch 5 abhängt, **dadurch gekennzeichnet, dass** der Sensor mit einer optischen Achse (39) versehen ist, die eine flacher Ebene durch die erste Öffnung im Wesentlichen in der Mitte der ersten Öffnung schneidet.

27. Tragbare Kamera nach einem der vorhergehenden Ansprüche, **dadurch gekennzeichnet, dass** die Verarbeitungsmittel zum Extrahieren von Text aus dem Objekt und zum Umwandeln von extrahiertem Text in Sprache angeordnet ist.

## Revendications

1. Dispositif de prise de vues portatif (1) destiné à enregistrer une image d'un objet (4) tel qu'un document papier imprimé, dans lequel le dispositif de prise de vues est agencé de façon à être positionné sur l'objet à enregistrer, dans lequel le dispositif de prise de vues est doté d'une surface inférieure extérieure (6) qui est agencée de façon à être en contact avec l'objet si le dispositif de prise de vues est positionné sur l'objet, d'un capteur sensible à la lumière (8) destiné à obtenir une image d'une partie au moins de l'objet, et de moyens de traitement (12) destinés à traiter l'image obtenue à l'aide du capteur, dans lequel le dispositif de prise de vues est doté d'au moins une unité d'éclairage (14, 34) destinée à éclairer l'objet à enregistrer lorsque le dispositif de prise de vues est positionné sur l'objet, dans lequel l'une au moins des unités d'éclairage est agencée dans le dispositif de prise de vues en une position par rapport au capteur telle que, si l'objet qui est enregistré était un miroir plat sur lequel est positionné le dispositif de prise de vues pour enregistrer la surface réfléchissante du miroir plat, l'une au moins des unités d'éclairage serait placée dans une zone où le capteur ne pourrait pas voir l'une au moins des unités d'éclairage, et l'une au moins des unités d'éclairage serait placée en dehors du champ de vision du capteur, lequel champ de vision est formé en association avec le miroir plat, **caractérisé en ce que**, le dispositif de prise de vues est agencé de telle sorte que les rayons de lumière de l'une au moins des unités d'éclairage qui sont, en service, envoyés vers l'objet, ne soient pas diffusés, et soient envoyés vers l'objet par l'intermédiaire d'au moins un miroir de lumière du dispositif de prise de vues au moyen d'une réflexion spéculaire seulement et/ou par l'intermédiaire d'au moins une lentille au moyen d'une transmission spéculaire seulement.

2. Dispositif de prise de vues portatif selon la revendication 1, **caractérisé en ce que** la surface inférieure extérieure est plate.

3. Dispositif de prise de vues portatif selon l'une quelconque des revendications précédentes, **caractérisé en ce que** l'objet est positionné contre la surface inférieure extérieure.

4. Dispositif de prise de vues portatif selon l'une quelconque des revendications précédentes, **caractérisé en ce que** le dispositif de prise de vues est doté d'au moins un miroir de lumière, et l'un au moins des miroirs de lumière est agencé afin de dévier le chemin de lumière qui s'étend à partir de l'une au moins des unités d'éclairage vers l'objet.

5. Dispositif de prise de vues portatif selon la revendication 4, **caractérisé en ce que** le capteur est doté d'un axe optique (39), dans lequel, en service, l'une au moins des unités d'éclairage est positionnée dans un plan d'unité d'éclairage qui est perpendiculaire à l'axe optique, et dans lequel le plan de l'une au moins des unités d'éclairage se situe entre le capteur et la surface inférieure extérieure.

6. Dispositif de prise de vues portatif selon la revendication 5, **caractérisé en ce que** en service, le miroir de lumière se situe dans un plan de miroir qui présente un angle par rapport au plan d'unité d'éclairage.

7. Dispositif de prise de vues portatif selon la revendication 6, **caractérisé en ce que** le miroir de lumière se situe entre le plan d'unité d'éclairage (40) et un plan de capteur (44) qui s'étend à travers une surface extérieure du capteur qui reçoit la lumière afin d'enregistrer l'image, dans lequel le plan de capteur est perpendiculaire à l'axe optique.

8. Dispositif de prise de vues portatif selon l'une quelconque des revendications précédentes, **caractérisé en ce que** le dispositif de prise de vues est doté d'une première partie de corps (50), d'une seconde partie de corps (52) et de moyens formant charnière (54) destinés à connecter ensemble la première partie de corps et la seconde partie de corps, dans lequel la première partie de corps peut se déplacer par rapport à la seconde partie de corps, entre une condition de travail repliée et une condition de travail dépliée pour utiliser le dispositif de prise de vues, dans lequel la seconde partie de corps est dotée du détecteur, et la première partie de corps est dotée d'au moins une unité d'éclairage, et dans lequel, dans la condition de travail dépliée, il existe une distance entre la première partie de corps et la seconde partie de corps.

9. Dispositif de prise de vues portatif selon la revendication 8, **caractérisé en ce que** la première partie de corps est agencée de façon à être positionnée sur l'objet à enregistrer.

10. Dispositif de prise de vues portatif selon la revendication 9, **caractérisé en ce que** la première partie de corps comprend la surface inférieure extérieure.

11. Dispositif de prise de vues portatif selon l'une quelconque des revendications précédentes 8 à 10, **caractérisé en ce que** l'une au moins des unités d'éclairage est agencée de façon à envoyer la lumière dans la direction de la seconde partie de corps si le dispositif de prise de vues se trouve dans la condition de travail dépliée.

12. Dispositif de prise de vues portatif selon l'une quelconque des revendications précédentes 8 à 11, **caractérisé en ce que** si le dispositif de prise de vues se trouve dans la condition de travail dépliée, en service, la seconde partie de corps s'étend au-dessus de la première partie de corps.

13. Dispositif de prise de vues portatif selon l'une quelconque des revendications précédentes 8 à 12, si elle dépend de la revendication 4, **caractérisé en ce que** le miroir de lumière est formé par une surface extérieure de la seconde partie de corps, dans lequel, si le dispositif de prise de vues se trouve dans la condition de travail dépliée, en service, le miroir de lumière fait face vers le bas.

14. Dispositif de prise de vues portatif selon l'une quelconque des revendications précédentes, **caractérisé en ce que** le dispositif de prise de vues comprend un affichage (10), dans lequel les moyens de traitement destinés à traiter l'image obtenue à l'aide du capteur, sont agencés pour afficher sur l'affichage une partie au moins de l'image enregistrée.

15. Dispositif de prise de vues portatif selon la revendication 14, **caractérisé en ce que** les moyens de traitement sont agencés pour procéder à un grossissement sélectif de l'image à afficher sur l'affichage (10).

16. Dispositif de prise de vues portatif selon la revendication 14 ou 15, si elle dépend de la revendication 4, et de l'une quelconque des revendications 8 à 13, **caractérisé en ce que** la seconde partie de corps est dotée de l'affichage (10), dans lequel l'affichage et le miroir de lumière se situent sur des côtés opposés de la seconde partie de corps.

17. Dispositif de prise de vues portatif selon l'une quelconque des revendications précédentes 8 à 16, **caractérisé en ce que**, dans la condition pliée, les première et seconde parties de corps viennent en butée l'une contre l'autre.

18. Dispositif de prise de vues portatif selon l'une quelconque des revendications précédentes 8 à 17, si elle dépend de la revendication 4, **caractérisé en ce que**, dans la condition pliée, le miroir de lumière vient en butée contre une seconde surface extérieure de la première partie de corps, qui se situe à l'opposé de la surface inférieure extérieure de la première partie de corps qui, en service, est en contact avec l'objet à enregistrer.

19. Dispositif de prise de vues portatif selon l'une quelconque des revendications précédentes 8 à 18, **caractérisé en ce que**, la première partie de corps et la seconde partie de corps présentent chacune une forme globale de plaque rectangulaire plate, dans lequel de préférence, la première partie de corps présente les même formes globales et dimensions que celles de la seconde partie de corps.

20. Dispositif de prise de vues portatif selon la revendication 19, **caractérisé en ce que** la première partie de corps est dotée d'une ouverture destinée à enregistrer l'objet.

21. Dispositif de prise de vues portatif selon la revendication 14 ou 15, si elle ne dépend d'aucune des revendications 8 à 13, **caractérisé en ce que** le dispositif de prise de vues est doté d'une première partie de corps (100), d'une seconde partie de corps (102), et de moyens (104) destinés à connecter et déconnecter la première partie de corps et la seconde partie de corps, dans lequel la seconde partie de corps est dotée de l'une au moins des unités d'éclairage, du capteur et de l'affichage (10), dans lequel la première partie de corps est agencée de façon à être positionnée sur l'objet à enregistrer, tandis que la seconde partie de corps est connectée à la première partie de corps de telle sorte que, en service, la première partie de corps procure une distance fixe entre la seconde partie de corps et l'objet à enregistrer, dans lequel la première partie de corps est dotée d'une paroi latérale (106) qui entoure un espace intérieur (108) de la première partie de corps, et d'une première et d'une seconde ouvertures (110, 112) qui se situent à l'opposé l'une de l'autre, et qui fournissent un accès visible à l'espace intérieur, et dans lequel, si la première partie de corps et la seconde partie de corps sont connectées ensemble, la seconde ouverture fait face à la seconde partie de corps, et la première ouverture, en service, fait face à l'objet à enregistrer, de telle sorte que le capteur puisse saisir une image de l'objet à enregistrer à travers la seconde ouverture, l'espace, et la première ouverture.

22. Dispositif de prise de vues portatif selon la revendication 21, **caractérisé en ce que** la première partie de corps comprend la surface inférieure extérieure.

23. Dispositif de prise de vues portatif selon la revendication 22, **caractérisé en ce que** la surface inférieure extérieure comprend la première ouverture.

24. Dispositif de prise de vues portatif selon la revendication 22 ou 23, **caractérisé en ce que** l'affichage est incliné par rapport à la surface inférieure extérieure si la seconde partie de corps est connectée à la première partie de corps.

25. Dispositif de prise de vues portatif selon la revendication 23 ou 24, **caractérisé en ce que**, si la première partie de corps est connectée à la seconde partie de corps, la distance entre l'une au moins des unités d'éclairage et la surface inférieure extérieure, est inférieure à la distance entre le capteur et la surface inférieure extérieure.

26. Dispositif de prise de vues portatif selon l'une quelconque des revendications précédentes 21 à 25, si elle ne dépend pas de la revendication 5, **caractérisé en ce que** le capteur est doté d'un axe optique (39) qui coupe un plan plat à travers la première ouverture, sensiblement au centre de la première ouverture.

27. Dispositif de prise de vues portatif selon l'une quelconque des revendications précédentes, **caractérisé en ce que** les moyens de traitement sont agencés pour extraire du texte de l'objet, et pour convertir le texte extrait en parole.
